# EUROPEAN PATENT SPECIFICATION

(11) **EP 3 826 956 B1**
(45) Date of publication and mention of the grant of the patent: **10.07.2024**
(21) Application number: 19786386.3
(22) Date of filing: 12.07.2019
(51) Int. Cl.: B66D 1/74, A01G 23/099

(54) **INTRINSICALLY-SAFE DYNAMIC BRAKING DEVICE**
EIGENSICHERE DYNAMISCHE BREMSVORRICHTUNG
DISPOSITIF DE FREINAGE DYNAMIQUE À SÉCURITÉ INTRINSÈQUE

(30) Priority: 24.07.2018 IT 201800007480
(43) Date of publication of application: 02.06.2021
(73) Proprietor: Zulato, Tommaso, 35026 Conselve (PD) (IT)
(72) Inventor: Zulato, Tommaso, 35026 Conselve (PD) (IT)
(74) Representative: Leganza, Alessandro
(86) International application number: PCT/IB2019/055969
(87) International publication number: WO 2020/021379

(56) References cited:
- WO-A2-03/031287
- JP-A- H0 428 695
- US-A- 4 721 285
- US-A- 5 971 363

## Description

### TECHNICAL FIELD

The present invention relates to braking devices used to control the lowering of branches during pruning or plant removal operations performed by a rope arborist anchored to the tree.

### BACKGROUND ART

A careful and timely maintenance of tall trees is important to improve not only the structure, aesthetics, health of trees, but especially to guarantee safety of people and surrounding structures. Maintenance practices such as pruning or tree removal involve complex operations due to the height of the plant which can often exceed 40 m. When the falling of branches or trunk sections may damage surrounding buildings, infrastructures or other trees, pruning and tree removal cannot be carried out by workers on the ground or raised at height by elevation platforms. Safety hazards are even increased if the tree to be pruned or cut down is placed in the premises of historic buildings.

Conditions like these require that cutting or pruning have to be done by a skilled worker who is able to perform the necessary operations at height directly anchored to the tree. For this purpose climbing and positioning equipment such as slings, ropes and other mountaineering equipment are generally used.

Such highly specialized workers are called "tree climbers" or "rope arborists". Typically, they operate assisted by at least one other worker on the ground so that while the tree climber at height use a chainsaw to cut a branch or a trunk section, the operator on the ground provide assistance to safely lower the cut pieces in order to prevent damages to surrounding buildings or structures or injuries to persons which can be even fatal if branches or trunk pieces fall out of control. This operation is often named "assisted lowering".

Clearly the "assisted lowering" is a critical practice considering the peculiar work conditions of the rope arborists and the fact that the mass of the cut piece is not exactly known *a priori.*

Known devices named "lowering brakes" or "descending brakes", or simply "clutches", are usually used for slowing the fall speed of a branch or trunk piece. Brakes of a known type are, for example, those made by the ArbPro company, or those described in the international application WO2010092319A1 "Arborist tool" in the name of Coates, which discloses the preamble of claim 1, or those disclosed in

the Japanese application JP2017000083A "Tree-trimming apparatus", in the name of Aoba Ryokka Kogyo Co Ltd.

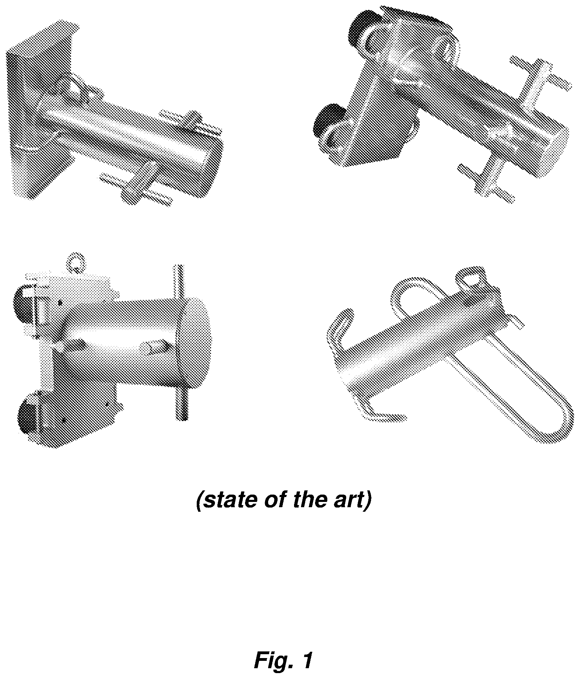

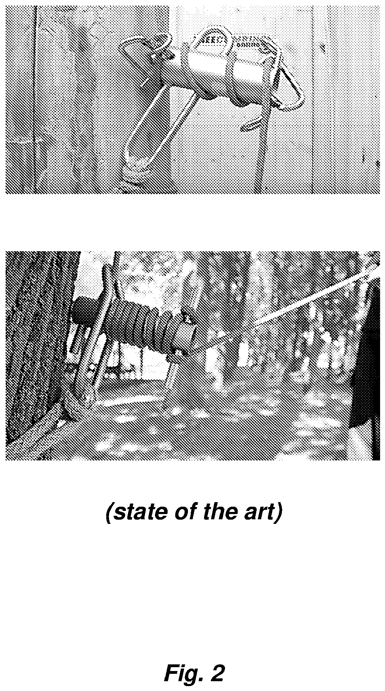

As shown in the accompanying Figure 1 and Figure 2, in the simplest form such known braking devices essentially consist of a metal cylindrical body having hooks attached thereto. Using a common type of rope the lowering brake is first firmly tied to the tree trunk; then a special rope (named "rigging rope") is wound around the cylinder for a well-defined number of wraps; finally, one end of the rope is secured to the branch to be cut by the arborist at height. With these known devices, the speed of the falling piece is slowed due to the dynamic friction force generated by the rubbing of the rigging rope against the surface of the cylinder body.

In the market are available also lowering brakes with more complex geometries designed to facilitate the break positioning on the trunk, prevent overlapping of the rope wraps, increase friction force or the maximum workload. Anyhow, they are based on the same braking principle i.e. the dynamic friction generated by a rope that has relative movement with respect to the surface of the cylindrical body (or other equivalent element of the lowering brake). It is important to point out that in all the geometries of the lowering brakes, the speed slowing of the falling piece is proportional to the number of rope wraps since the friction force depends on the contact surface between the rope and the cylinder surface. Therefore, the optimal number of wraps to be wrapped around the lowering brake is a critical parameter having a vital impact on the safety of the workers on ground and at height. Obviously this parameter depends on the mass of the piece to be cut, but the mass is not generally known *a priori.* A wrong number of wraps of rope around the cylindrical body causes two dangerous conditions: a low number of wraps leads to a high and potential hazardous fall speed; on the contrary, a high number of wraps can stop the piece fall before it reaches the ground and this make the cut piece swinging or even the whole tree swinging. As reported in the ARBPRO LD2 (a lowering brake produced by ArbPro Ltd) instruction manual available on the web, if too many wraps are wrapped around the cylindrical body, dynamic loads generated during the assisted lowering can be so high that the stability of the entire lowering system is compromised to the extent that even fatal injuries to workers may occur.

Despite the innovations introduced and the different geometries available, known lowering brakes have intrinsic drawbacks and defects largely due to the rigging rope that is required for a use in safe conditions.

A first limitation is the continuous wear which affects the rope due to the working mechanism of the known lowering brakes. Depending on the mass of the falling piece, the temperature due to the friction force can be so high that the rope will smoke-off. It is evident that these demanding working conditions considerably stress the rigging rope, despite the special construction characteristics (e.g. a "double braid" design and PU coating), so that for safety reasons it must be periodically tested and/or replaced after a certain number of work cycles. A second limitation is selecting properly the number of wraps to be wrapped around the break cylinder. As mentioned before, despite being a critical factor for safety, the number of wraps is determined *a priori* on the basis of the experience of the arborist. In addition, the number of wraps wound around the lowering break cannot be changed during tree pruning or tree removal operations unless these operations are stopped to permit the adjustment of the number of wraps to the mass of the different pieces to be cut.

A third limitation is the limit imposed on the diameter of the rope that is selected by taking into account the geometry of the lowering brake, the intrinsic flexibility of the rope itself (expressed through a parameter called "bending ratio") as well as the characteristics of the winches used to lower the cut pieces. These factors limit the maximum diameter of the rope to less than 16.5 mm and consequently they limit the maximum friction generated by the break. In case of a large piece, a rigging rope of 16.5 mm diameter may generate insufficient friction so that the cut piece descents with high and dangerous speed.

Finally, the rather high cost of the rigging rope should not be overlooked. High costs are due to the special construction characteristics that the rope must have to ensure a great resistance to abrasion and a perfect sliding inside the pulleys and on the lowering brakes.

In conclusion, in view of the best knowledge of the present inventor, the drawbacks and limitations of the lowering brakes summarized hereto have not been adequately addressed and solved. Therefore, there are still margins to improve known braking devices useful for controlling the fall of branches during tree pruning or removal of plants by rope arborists.

### SUMMARY OF THE INVENTION

### Object/scope of the invention

In view of the above drawbacks of the prior art, the present invention intends to overcome the existing disadvantages related to known braking devices by providing an improved solution to the problem of accompanying the fall to the ground of branches or trunk pieces in a safe and controllable manner during the operations of pruning and felling of trees, particularly of tall trees near buildings.

Accordingly the first and main object of the present invention is to provide a braking device which can control the fall of tree branches or trunks pieces in total safety both for the operator on the ground and for the worker at height anchored to the tree. This scope includes the realization of an "intrinsically safe" braking device which allows to control and change the lowering speed at any time during the fall without depending crucially on the "human factor" (i.e. unlike known braking devices where the fall speed is determined *a priori* based on the operator experience).

Within the main scope described above, a second important object of the present invention is to provide a braking device that can be used with ease for the maintenance of trees of any height/diameter, even in critical locations, for example during maintenance of high-trees near historic buildings. In particular, this purpose includes the realization of a braking device capable of controlling the fall of branches and trunk pieces of any size.

In addition, within the scope of the first and second scopes set forth above, a third important object of the present invention is to provide a braking device of limited dimensions that is easy to install/remove and does not require special maintenance.

Furthermore, within the scope of the aforementioned scopes, a fourth important object of the present invention is to provide a braking device which can be equipped with a motor in order to lift branches and sections of trunk in locations where it is not possible or secure the complete lowering of these parts to the ground.

Finally, a last object of the present invention is to provide a braking device which can be manufactured at low cost with known technologies.

Additional objects and advantages of the invention will be set forth in part in the detailed description which follows and in part will be obvious from the description, or may be learned by practice of the invention.

### Description of the invention

These and other objects, which more clearly will appear later on, are achieved by a braking device which in its essential features is defined by the attached main claim and in its detailed aspects by the dependent claims. The aforementioned claims, to which reference should be made for the sake of brevity, are hereinafter specifically defined and are intended as an integral part of the present description.

In summary, this braking device consists of two units which are functionally linked one to the other: a braking unit which performs its action by controlling the rotary motion of a rope drum i.e. a cylindrical element having wrapped therearound a rope whose one end the tree branch or trunk piece to be lowered is tied; a control unit which controls a brake capable of exerting a friction force on said rope drum limiting or stopping its rotary motion.

Based on the morphology of the tree and the place where it is placed, the rope that mechanically connects this rope drum and the cut branch forms a path defined by a system of pulleys, snap-hooks, rings, and other equipment. In this regard, in the present patent specification the term "lowering system" will designate as a whole the braking device according to the present invention together with ropes, pulleys, carabiners, winches and other components used by the rope arborists to lower in a controllable manner the lowering of a tree branch or trunk section.

The general idea underlying the present invention is to control the fall of the branch through the dynamic "metal-metal" friction force exerted by the brake on the rope drum and not by the dynamic "rope-metal" friction force exerted by the rope on the cylinder as in conventional braking devices. To implement this inventive concept, the present inventor has devised a braking device wherein the rope wrapped on the rope drum does not slip and it is stationary with respect to the rope drum. For this reason said braking device is not subject to overheating generated by dynamic friction. Unlike conventional braking devices, the worker on the ground can advantageously control in real time the fall of the branch by adjusting the control unit according to the dynamics of the fall. Therefore, the braking device according to the present invention is named "dynamic braking device".

### Brief description of drawings

Further characteristics and advantages of the invention will become apparent from the description of three, preferred but not exclusive embodiments, herein illustrated by way of non-limiting example in the accompanying drawings, in which:
- Figure 1 shows some known braking devices named "lowering breaks";
- Figure 2 shows two known braking devices installed on the trunk of a tree;
- Figure 3 schematically illustrates the components and use of the braking device according to the main embodiment of the present invention;
- Figure 4, with reference to the preferred embodiment of the braking device according to the invention depicts in (a), a perspective view of the braking unit, while in (b) and (c) the side views of the same unit on opposite sides.

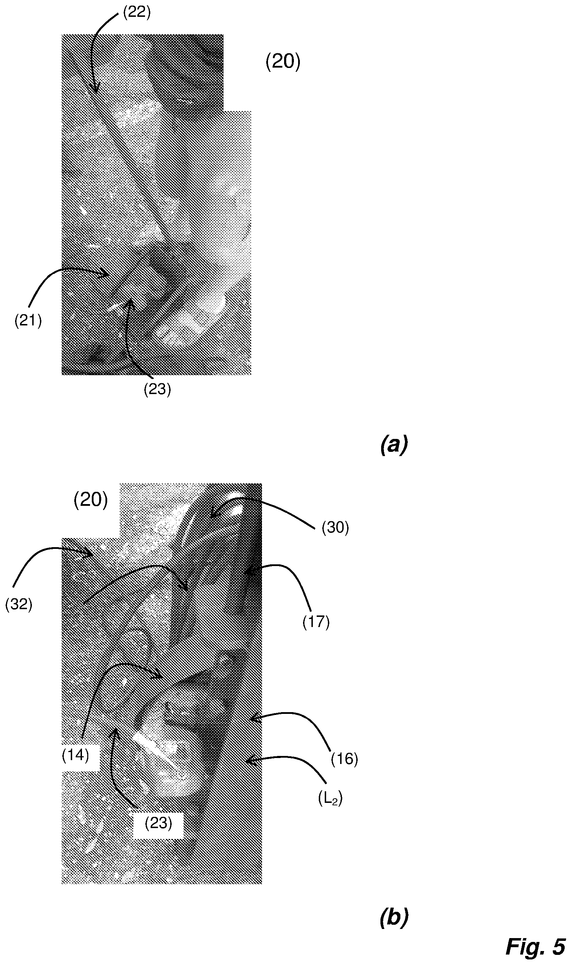

- Figure 5, with reference to the preferred embodiment of the invention, represents in (a) the control unit of the braking device, while in (b) a detail of the brake control unit;
- Figure 6 illustrates the braking unit according to the preferred embodiment, in (a), provided with a dynamometric brake, and in (b), provided with a rope winding system.

### DETAILED DESCRIPTION OF THE INVENTION

### Preferred embodiment

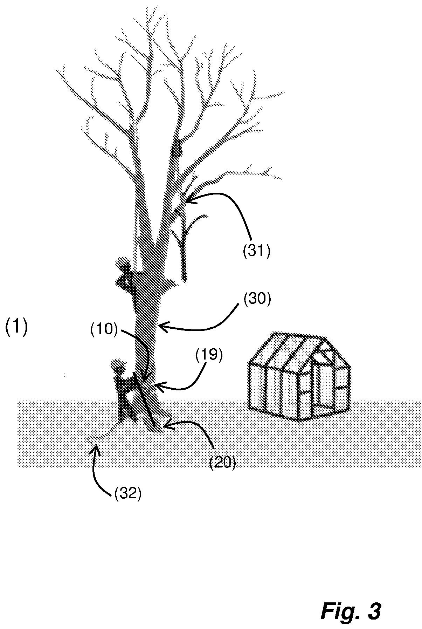

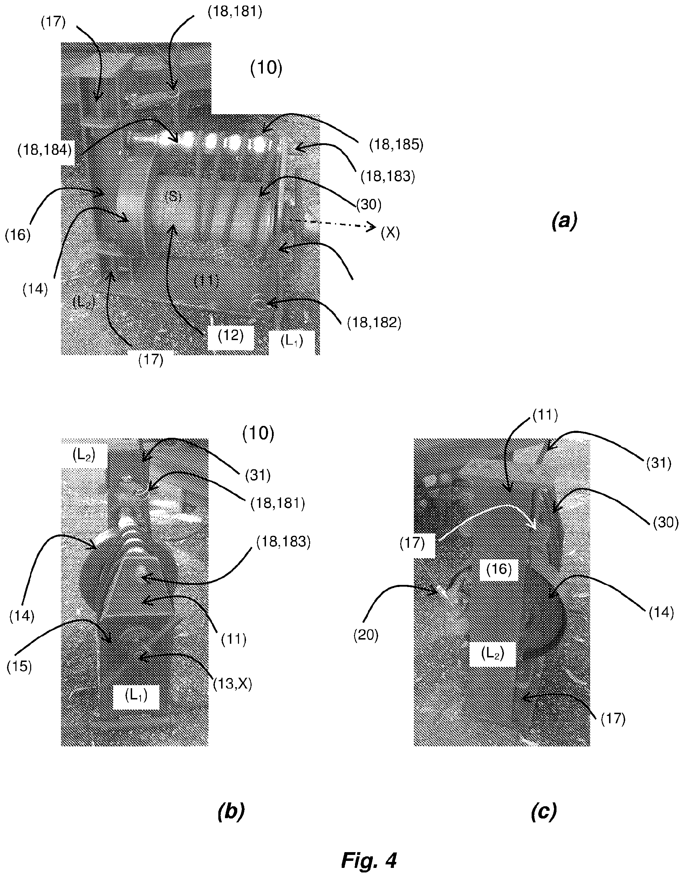

In the preferred embodiment of the present invention herein illustrated by way of example and not limitation with reference to the accompanying Figures 3 and 4, the braking device is indicated by (1) and comprises a braking unit (10) whose action is controlled by a control unit (20). In In turn, said braking unit (10) comprises: a frame (11), a rope drum (12) mechanically connected to a shaft (13) and coaxial thereto; a brake (14) mechanically connected to said frame (11) and able to control the rotation of the rope drum (12) and/or of the shaft (13).

Said frame (11) contains the components (12,13,14) and has, a first end (L₁), preferably in the form of a removable closure plate (15) fixed to the frame by means of nuts and bolts, and a second end (L₂), preferably in the form of a support element (16) having fastening means (17) for fasten said frame (11) at the base of the trunk of the tree to be pruned or cut down. Convenient fastening means (17) can be rings or hooks that allow the operator to firmly fasten the frame (11) by passing a band or a number of wraps of rope (19), of a common type, around the base of the trunk and through such rings or hooks. However, other known fixing means can be used.

In the first embodiment of the present invention, herein illustrated by way of example and not limitation, the rope drum (12) is rotatably constrained to said first and second ends (L₁,L₂) of the frame (11) through the coaxial shaft (13) so that it can rotate around the axis (X). Said shaft (13) can be, for example, a shaft with bearings.

Around the rope drum (12) there are wound a certain number of wraps of a rope (30). The worker at height ties the cut piece to be lowered at the first end (31) while the second end (32) of the rope is left free or tied to a support fixed to the ground.

For the purposes of the present invention, it is essential that the rope (30) does not slip when the rope drum (12) rotates around its own axis (X) during the assisted fall of the tree branch or portion of trunk. For this purpose the rope drum (12) has a high-friction surface. By way of non-limiting example of the present invention, said rope drum (12) is made of metal and present on its surface (S) a non-directional pattern. Said pattern can be obtained by means of knurling, moulding or other machining operation useful for producing a high-friction surface on the surface (S).

Although a metal drum represents the preferable option, other solutions are however possible as a rope drum in rubber, wood or plastic having a knurled or dotted surface.

Advantageously, it is not necessary that the rope (30) is specifically designed as a rigging rope like the type used in known lowering brakes. The use of the braking device according to the present invention simply requires a rope with adequate breaking load and friction resistance, of any diameter, even greater than 16.5 mm, and therefore a relatively low flexibility with respect to that used in the known lowering brakes. In fact, flexibility is a less stringent requirement taking into account that the rope (30) is wound on a rope drum (12) which has a relatively large radius, typically between 50 and 100 mm, and the rope must not slide on the surface of the cylinder. In practice, the braking device described herein requires a rope with less demanding technical characteristics and therefore less expensive, compared to rigging ropes specifically designed for lowering brakes.

In the first embodiment of the present invention, herein illustrated here by way of example and not limitation, to facilitate the correct insertion of the rope (30) and alignment of the wraps on the rope drum (12), the present inventor has advantageous provided a guiding system (18) comprising two rope guides (181,182), to facilitate the passage of the rope entering and leaving the braking device (1), and a guide rod (183) which prevents the rope (30) from twisting, or overlap in layers or from moving forward/backward along the surface of the rope drum (12). If fact, these conditions occur, the effective contact surface between the rope and the drum is reduced and therefore the friction force is also reduced, thus limiting the capability to slow the speed of the falling piece. Furthermore, the incorrectly guided rope can overlap and form knots that would force operators to interrupt tree pruning or removal in order to carry out repairing operations that could be dangerous. Preferably the guide rod (183) is made of metal and has a cylindrical symmetry shape with a section along the axis (X) consisting of a succession of adjacent grooves (184) alternating with reliefs (185) having a profile, width and depth such as to accommodate the rope (30) properly i.e. avoid tearing and preventing the exit from the groove and the displacement on one of the adjacent groove. In the preferred embodiment of the present invention herein illustrated by way of example and not limitation with reference to the accompanying Figures 2(b) and 2(c), the braking device (1) comprises a brake (14) connected to said frame (11), preferably a disc brake in which said disc is mechanically connected to the rope drum (12) and therefore also to the shaft (13). Preferably the operation of said brake (14) is controlled by a portable mechanical control unit (20) comprising a plate (21) on which a lever (22) of suitable length is pivoted (for example of about 1.5 m). Advantageously the worker can stand on said plate to firmly block it on the ground.

The movement of the lever (for example, towards the operator) activates a piston hydraulically connected to an end of a fluid circuit (23) such as a hydraulic circuit; in turn, the fluid in said circuit (23) transfers the pressure exerted by the piston onto the pistons of the brake calipers (14), placed at the opposite end of said circuit, and presses the pads against the disc thus exerting a friction force which is able to slow down the rotary motion of the rope drum (12) mechanically connected to said disk. On the contrary, the movement of the lever in the opposite direction (for example, away from the operator) releases the pressure exerted by the piston on the fluid and also the friction force exerted by the pads against the disk, thus increasing the speed of rotation of the rope drum (12).

It is evident that in this manner the lowering speed of the cut piece can be easily controlled since the rope (30) wound around the rope drum (12) does not slip on the surface during the lowering. Therefore, the motion of the cut piece, being mechanically connected to the motion of the rope drum (12), can be controlled by the brake (14).

In detail, the braking device (1) herein described by way of example and not limitation, is used in the following manner during a typical tree pruning or tree removal.

The rope arborists climbs the tree while carrying the first end (31) of the rope (30) which then he uses to secure the branches to be cut (Figure 3). In this stage, the rope is not pulled. The return of the rope (30) to the ground is preferably secured by a pulley firmly fixed to the tree being subjected to the maintenance or removal operation. The ground worker removes the closure plate (15) from the frame (11) and inserts the second end (32) of the rope (30) in the input rope guide (181); then wound the rope (30) around the knurled rope drum (12) passing the rope inside the adjacent grooves (184) of the guide rods (183); finally the worker inserts the second end (32) of the rope (30) into the output rope guide (182). Since the rope drum (12) has a surface with undirected knurling, the second end (32) of the rope (30) can indifferently be inserted into the rope guides (181) or (182). The guiding means (18) herein disclosed achieve two remarkable advantages. First, it facilitates the correct insertion of the rope (30) in the braking unit (10) and avoid knots formation. Second, the guiding means (18) maintains the proper alignment of the rope wraps wrapped around the rope drum (12) during the entire operation of tree pruning or removal and therefore it ensures that the rope (30) does not slip on the knurled surface of the rope drum (12). This essential working condition may evidently be lacking if two or more wraps of rope overlap. If this case, the effective contact area between the rope and the knurled surface is reduced as well as the static friction force and this results in rope slipping (this is due to the static rope-rope friction which is lower than the rope/knurled surface friction).

Once the insertion of the rope (30) in the braking unit (10) is completed, the worker on the ground pulls the rope (30) to avoid a loosening that would cause the abrupt fall of the piece once cut with consequent safety hazards. At this point the rope arborist starts to cut the branch of tree or trunk portion secured to the rope (30), while the operator on the ground brakes the falling pieces by acting on the lever of the control unit (20). He can adjust dynamically the braking action according to the instantaneous lowering speed and therefore to the mass of the cut pieces (as mentioned previously the mass is not known *a priori*), as well as to the different working situations that may arise (e.g. location of the tree, maintenance vs. removal of the tree and so on).

Unlike known lowering breaks, the braking device (1) according to the present invention is advantageously able to adapt to different working conditions. For instance, if the rope arborist is able to place the pulley of the rope (30) *above* the cutting height, the rope (30) remains constantly in tension and controls the fall of the piece as soon as it is detached from the tree. This conditions typically occurs during pruning or at the beginning of a plant removal. When the operator on the rope must necessarily place the rope pulley *under* the cutting height, once cut, the tree branch first performs a free-fall for a certain time and then suddenly slows as the rope (30) is pulled. Generally, this condition occurs at the end of the plant removal.

From the description given herein with reference to a preferred but not exclusive embodiment, it will be apparent to the skilled in the art that many modifications of the braking device (1) are possible.

A first modification relates to the architecture of the system and consist of a braking unit (10) integrated to a control unit (20), while in the preferred embodiment these units were separated. Moreover, in each of said units (10,20) the constituent components can be different in type, size and number compared to those hereinabove described as long as they are compatible with the purpose of the invention.

For example, the diameter or the length of the rope drum (12) can be any provided that it allows the realization of a portable braking device (1), simple to make, inexpensive and especially able to ensure, for a predetermined load, the maximum possible friction between the rope (30) and the surface of the rope drum (12). This arrangement keeps the rope steady with respect to the surface of the drum and ensures that the kinetic energy of the falling piece is dissipated in a controlled manner by the brake (14) and not through the rope-metal friction as in known braking devices.

Moreover, even if the presence of a single rope drum (12) represents the preferred choice in terms of cost and construction simplicity, the braking unit (10) can include several rope drums, for example two, both rotatably connected to the first and second end (L₁, L₂). In this case, for the purposes of the implementation of the present invention, it is sufficient that the brake (14) can control the rotation of at least one of the rope drums (12) and/or of the corresponding shafts (13).

Many further variations of the preferred embodiment can be obtained by modifying the brake (14) and/or the control unit (20). For example, the disc brake (14) can be replaced by a drum brake, or by another type of mechanical brake, or by a non-mechanical brake such as an electromagnetic brake (in this case the control unit must contain an electric generator and an electric circuit). Combinations of identical or different brakes are also possible, for example a brake (14) consisting of two, or even more, disc brakes or other types of brakes.

The operation of the brake (14), which in the preferred embodiment is of the mechanical type and it is actuated by a lever, can also be different and can be replaced, for instance by an electromechanical actuator (for example based on the Arduino board) which acts directly on the calipers of the brake (14) causing the pads to be pressed against the disc. Advantageously, this electromechanical actuator can be controlled by a radio pulse sent by one of the worker. A radio control unit (20) can also be miniaturized and made portable so as to allow the worker at height to maneuver the braking device (1) in complete autonomy and safety.

Further variations to the preferred embodiment are related to the guiding means (18) used to facilitate the passage of the rope entering and leaving the breaking device and to ensure the alignment of the rope (30) on the rope drum (12). Especially in configurations of the braking device (1) having several rope drums, the guiding means (18) can include more than two rope guides (181,182) and more than one rod guides (183).

Finally, the rotation axis (X) of the rope drum (12) which rotates during the lowering of the tree branch is parallel to the ground so that it is substantially perpendicular to the section of rope (30) between the input rope guide (181) and the rope drum (12). Other orientations of the axis of rotation of the rope drum are however possible provided that the rope (30) does not slip on the high-friction surfaces (S) of the rope drum (12).

Naturally, depending on the needs, the frame (11) and in particular the first and second ends (L₁, L₂) may have different configurations from those described with reference to the preferred embodiment. These configurations must in any case ensure that the shafts (13) of the rope drums (12) are rotatably constrained to the frame (11). Other variants will appear obvious to the expert in the art from the description given here and from the implementation of the present invention.

Clearly, from the description given here by way of example of the present invention and not of limitation, it is clear that this result has been achieved through a non-trivial inventive effort and represents a significant improvement in the specific technical field and allows to obtain a greater utility with respect to the known solutions. in particular in terms of safety. These advantages will become more apparent from the following description of two further embodiments of the present invention.

### Other embodiments

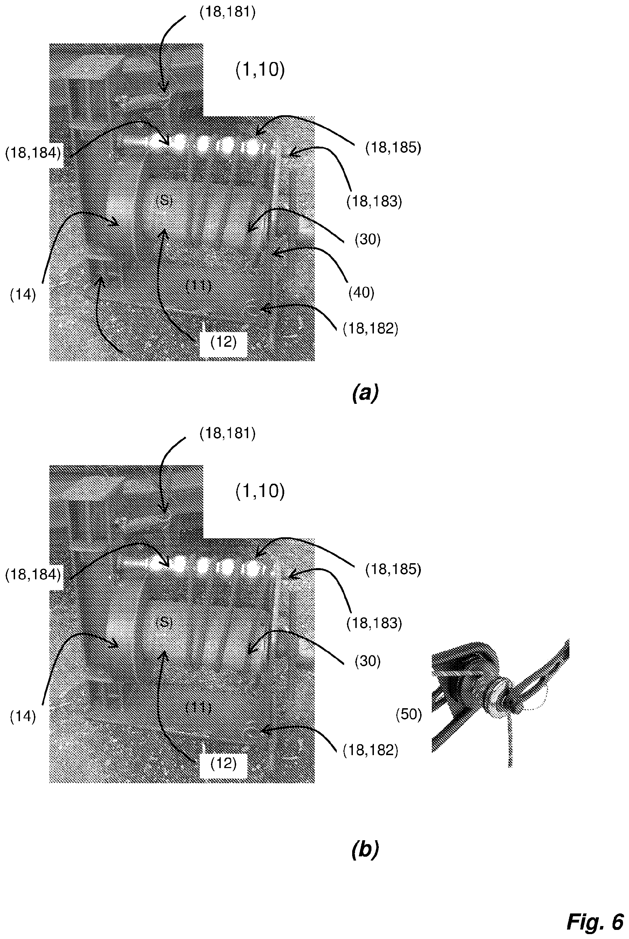

In the **second embodiment** of the present invention herein illustrated by way of example and not limitation with reference to the unit in Figure 6(a), the braking unit (10) is the same as in the previous case but in this embodiment further comprises a dynamometric brake (40) installed at one end of the shaft (13) which is mechanically connected to the rope drum (12); the control unit (20) is preferably a pedal actuator like the one described above.

When the instantaneous torque Mᵢₛₜ applied to the rope drum (12) exceeds a predetermined value Mₘₐₓ, then the dynamometric brake (40) regulates the action of the brake (14) on the rope drum and/or on the shaft (13), for example by causing the brake calipers to open and release the pressure against the disc.

This feature is particularly useful for increasing the safety not only of the braking device according to the invention but of the entire assisted lowering system which, as explained above, includes also pulleys, carabiners, ropes and other components in addition to the braking device according to the present invention. As a matter of fact, each of these equipment is characterized by its own maximum workload FRᵢ, corresponding to a breaking point MRᵢ, where i is an integer, 1≤i≤N, with N equal to the total number of equipment item in the lowering system. The minimum value between MRᵢ determines the maximum M_{system} tolerable moment by the entire lowering system; M_{system} is calculable based on the technical specifications of the equipment and the configuration of the lowering system in an obvious way for those skilled in the art.

However, although the manufacturers declare the maximum workload of the equipment of the assisted lowering system (in the case of a known lowering brakes a typical workload is 1500 kg), in practice it is not always possible for the rope arborists to understand if he operates safely within the maximum load range according to specific working conditions.

For this reason, taking into account that controlled trees removal operations involve dynamic workloads, it is possible in the absence of a dynamometric brake to unintentionally overcome the M_{system} value with lethal consequences for the arborist anchored to the tree due to the possibility of falls, or traumas related to the detachment of pulleys or branches, or injuries from fast moving ropes but also from chainsaw cuts.

Potentially hazardous conditions can occur, for example, when the worker on the ground suddenly brakes or blocks a branch that descends too quickly. In this case, the sudden break generates extremely high forces that propagate through the rope to the other equipment of the assisted lowering system compromising its stability and the anchorage point to which the worker at height is anchored. As an indication, a mass of 100 kg in free fall for a meter generates an impulsive force equivalent to the weight of a mass of about 600 kg.

On the contrary, if the assisted lowering system includes a dynamometric brake, it is possible to preset the value of Mₘₐₓ below the maximum value M_{system} tolerable by the entire assisted lowering system corresponding to the weakest component of the system itself.

In the event that at a certain instant during the assisted lowering of a tree branch the Mᵢₛₜ moment exceeds the Mₘₐₓ<M_{system} value, and the ground operator tries to slow down the fall by acting on the lever of the control unit (20), the dynamometric brake will regulate the braking action until the safety conditions are restored i.e. Mᵢₛₜ≤Mₘₐₓ≤M_{system}. In practice, thanks to the dynamometric brake, at each instant of the lowering operation the dynamic component (i.e. the impulsive forces generated by the stresses) is reduced to a minimum and the cut piece is left free to descend progressively in the best possible safety conditions.

The achievement of unsafe conditions during the tree pruning or removal can be signaled, for example, by means of a light and/or sound signal. Taking into account the noise level during tree maintenance operations, it is preferable that the sound signal is transmitted via radio to the operators, in particular to the worker at height.

It is important to point out that in any case the value of Mₘₐₓ can be adjusted during the lowering operation, unlike the known systems in which this value is evaluated *a priori* in an empirical way (in practice, the number of wraps around the lowering break) without any chance to modify the value during lowering of the tree branch or trunk section.

There are several known systems that the person skilled in the art can use to implement the mechanism described herein which is inspired by the ABS brake assist systems installed on motor vehicles. One of the many options is the so-called friction torque limiters of the type used in conveyor belts.

It is evident to the skilled in the art that the introduction of the dynamometric brake has advantageously increased the safety not only of the braking device (1), but of the entire assisted lowering system, thus achieving a further object of the present invention.

The **third embodiment** of the braking device (1) according to the present invention, described herein by way of example and not of limitation with reference to the unit in Figure 6(b), the braking unit (10) is the same as in the first or second embodiment but in addition it comprises a motorized rope winding system (50) able to rotate the shaft (13). The introduction of the motor (50) provides further flexibility to the braking device (1) according to the present invention which in this way not only allows to control the lowering of tree branches but also to control its raising.

In fact, in many working conditions tree branches or cut trunk sections cannot be lowered to the ground and they must be partially raised and guided to the place where it is possible to safely release them. A typical situation where the presence of the lifting motor is desirable occurs, for example, when the rope arborist cut the branches at a height h and the tree is close to perimeter walls of height *H*>h or when there are fountains, statues or other structures in the neighboring of the tree.

Types of motors useful for implementing this embodiment can be internal combustion engines or electric motors, although it is preferable to use manual engines such as a winch (for example a boat winch), since they do not require fuel or the availability of an electrical grid or charging batteries.

As shown schematically in the unit Figure 6, by way of example and not limitation of the present invention, the motor (50) is connected to the shaft (13), although other options are possible. From the present description it is apparent to those skilled in the art that the introduction of the motor (50) has advantageously increased the flexibility of the braking device according to the invention, making easy the application in any location even in a critical location.

To conclude, it has been found that the braking device hereinabove described fully achieves the intended aim and objects. It is understood that the invention is not limited to the exemplary embodiments shown and described herein and although the description and examples provided contain many details, these should not be construed as limiting the scope of the invention but simply as illustrative illustrations of some embodiments of the present invention. In fact, it will be apparent to a skilled person in this field that numerous variants are possible all falling within the same inventive concept. Therefore, any modification of the present invention which falls within the scope of the following claims is considered part of the present invention.

Where the characteristics and techniques mentioned in any claim are followed by reference signs, these reference marks have been applied solely for the purpose of increasing the intelligibility of the claims and consequently these reference marks have no limiting effect on the interpretation of each element identified by way of example from these reference signs.

## Claims

1. A braking device (1) for controlled lowering of branches, trunk pieces or suspended loads, comprising:
- a braking unit (10);
- a control unit (20) for controlling the action of said braking unit (10),
said braking unit (10) comprising:
- a frame (11) having a first end (L₁) and a second end (L₂) opposite to said first end (L₁), and having fastening means (17) for blocking said frame (11) to a fixed support;
- one or more rope drums (12) rotatably connected to said first and second ends (L₁, L₂) of said frame (11) by means of corresponding coaxial shafts (13) to said one or more rope drums (12); **characterized by** said braking device (1) comprising:
- one or more braking means (14) connected to said frame (11) and able to control the rotation motion of at least one of said rope drums (12) and/or of at least one of said coaxial shafts (13) about its axis during the controlled lowering of suspended loads, preferably branches or trunk pieces during tree pruning or tree cutting operations,
said one or more rope drums (12) around which one or more turns of a rope (30) are wound,
- said rope having a first end (31) secured to the suspended load to be lowered, and a second end (32) left free or constrained to a fixed support or to the ground,
- each one of said one or more rope drums (12) having a surface (S) which prevents slipping of said rope (30) on said surface (S) when said one or more rope drums (12) rotate about their axis as a result of the controlled lowering of the suspended load to be lowered.

2. The braking device according to the previous claim **characterized in that** each of said one or more rope drums (12) is made of metal, wood, rubber or plastic material and has a high friction surface (S) on which a non-directional pattern is accomplished by means of knurling, moulding or other machining operation useful for producing a high-friction surface.

3. The braking device according to claim 1 or 2, **characterized in that** it further comprises guiding means (18) to facilitate proper insertion of said rope (30) in the braking unit (10), said guiding means (18) comprising:
- one or more rope guides, preferably an input rope guide (181) and an output rope guide (182) to facilitate the passage of the rope (30) in and out of said braking unit (10);
- one or more guide rods (183) to prevent said rope (30) from overlapping, twisting or displacing along said one or more rope drums (12).

4. The braking device according to the previous claim, wherein said one or more guide rods (183) comprises a plurality of adjacent grooves (184) having a profile suitable to accommodate the rope (30) and prevent said rope from coming-off the groove, or prevent a rope displacement between one of the adjacent grooves, said one or more guide rods (183) being preferably made of metal and having a cylindrical shape with a section along the axis (X) consisting of a plurality of adjacent grooves (184) and reliefs (185) having a profile, width and depth such as to accommodate the rope (30) and prevent said rope from coming-off the groove, or prevent a rope displacement between one of the adjacent grooves.

5. The braking device according to one or more of the preceding claims, **characterized in that** it comprises:
- a single rope drum (12);
- a frame (11) made of metal, preferably steel, cast iron or aluminum, said frame (11) wherein
- said first end (L₁) is a removable closure plate (15) to facilitate said rope (30) winding around said rope drum (12), and optionally to facilitate said rope (30) winding around said rope drum (12) and to said guide rods (183);
- said second end (L₂) comprises a support element (16) having fastening means (17) for blocking said frame (11) to the trunk of a plant, or to the ground, or to another fixed support, preferably at the base of the trunk of the plant to prune or to cut down.

6. The braking device according to the previous claim, wherein said fastening means (17) are rings or hooks or other equivalent means useful for stably blocking said frame (11) to the tree trunk in association with cords, metal wires, screws or nails.

7. The braking device according to one or more of the preceding claims, **characterized in that** said one or more braking means (14) is selected from the group consisting of: caliper brakes, disc brakes, drum brakes, band brakes, oil bath brakes, or other mechanical brakes; magnetic shoe brakes, electromagnetic brakes, permanent magnet brakes, or other electromagnetic brakes; hybrid brakes obtained by a combination thereof.

8. The braking device according to one or more of the preceding claims, wherein said control unit (20) is of mechanical type, or electromechanical type, or electronic type and actuates said brake (14) by means of an oleodynamic or hydraulic circuit, a pneumatic circuit, an electric circuit, or radio pulses, or by a combination thereof.

9. The braking device according to the preceding claim, wherein said control unit (20) is of the mechanical type and comprises a plate (21) having a lever (22) pivoted thereto whose movement, transmitted by an oleodynamic circuit (23), determines the braking action of said disc brake (14).

10. The braking device according to one or more of the preceding claims, **characterized in that** it further comprises a dynamometric brake (40) connected to, or integral with, said shaft (13) and/or said rope drum (12) which adapts the braking action of said brake (14) when the instantaneous torque Mᵢₛₜ applied to said rope drum (12) exceeds a predetermined Mₘₐₓ value, so as to minimize impulsive dynamic loads and allow the suspended load lowering in the best safety conditions.

11. The braking device according to one or more of the preceding claims, **characterized in that** it further comprises a rope winding system (50) able to rotate the shaft (13) so as to control raising of suspended loads, preferably branches or trunk pieces during tree pruning or tree cutting.

12. The braking device according to the preceding claim **characterized in that** said rope winding system (50) comprises an actuator connected to said shaft (13), said actuator being a manual winch or an internal combustion engine or an electric motor.

## Patentansprüche

1. Eine Bremsvorrichtung (1) zum kontrollierten Absenken von Ästen, Stammstücken oder schwebenden Lasten, bestehend aus:
- eine Bremseinheit (10);
- eine Steuereinheit (20) zum Steuern der Wirkung der Bremseinheit (10),
wobei die Bremseinheit (10) umfasst:
- einen Rahmen (11) mit einem ersten Ende (L1) und einem zweiten Ende (L2) gegenüber dem ersten Ende (L1) und mit Befestigungsmitteln (17) zum Befestigen des Rahmens (11) an einem festen Träger;
- eine oder mehrere Seiltrommeln (12), die über entsprechende koaxiale Wellen (13) mit den ersten und zweiten Enden (L1, L2) des Rahmens (11) drehbar mit der einen oder mehreren Seiltrommeln (12) verbunden sind; **dadurch gekennzeichnet, dass** die Bremsvorrichtung (1) umfasst:
- ein oder mehrere Bremsmittel (14), die mit dem Rahmen (11) verbunden sind und in der Lage sind, die Drehbewegung von mindestens einer der Seiltrommeln (12) und/oder von mindestens einer der koaxialen Wellen (13) um sie herum zu steuern Achse beim kontrollierten Absenken von schwebenden Lasten, vorzugsweise Ästen oder Stammstücken bei Baumschnitt- oder Baumfällungsarbeiten,
besagte eine oder mehrere Seiltrommeln (12), um die eine oder mehrere Windungen eines Seils (30) gewickelt sind,
- das Seil hat ein erstes Ende (31), das an der abzusenkenden Last befestigt ist, und ein zweites Ende (32), das frei bleibt oder an einer festen Stütze oder am Boden befestigt ist,
- jede der einen oder mehreren Seiltrommeln (12) eine Oberfläche (S) aufweist, die ein Verrutschen des Seils (30) auf der Oberfläche (S) verhindert, wenn sich die eine oder mehreren Seiltrommeln (12) um ihre Achse drehen Ergebnis des kontrollierten Absenkens der abzusenkenden Hängelast.

2. Die Bremsvorrichtung nach dem vorhergehenden Anspruch, **dadurch gekennzeichnet, dass** jede der einen oder mehreren Seiltrommeln (12) aus Metall, Holz, Gummi oder Kunststoffmaterial besteht und eine Oberfläche (S) mit hoher Reibung aufweist, auf der eine ungerichtete Bewegung erfolgt Das Muster wird durch Rändeln, Formen oder andere Bearbeitungsvorgänge erreicht, die zur Herstellung einer Oberfläche mit hoher Reibung nützlich sind.

3. Die Bremsvorrichtung nach Anspruch 1 oder 2, **dadurch gekennzeichnet, dass** sie außerdem Führungsmittel (18) umfasst, um das ordnungsgemäße Einführen des Seils (30) in die Bremseinheit (10) zu erleichtern, wobei die Führungsmittel (18) Folgendes umfassen:
- eine oder mehrere Seilführungen, vorzugsweise eine Eingangsseilführung (181) und eine Ausgangsseilführung (182), um den Durchgang des Seils (30) in und aus der Bremseinheit (10) zu erleichtern;
- eine oder mehrere Führungsstangen (183), um zu verhindern, dass sich das Seil (30) entlang der einen oder mehreren Seiltrommeln (12) überlappt, verdreht oder verschiebt.

4. Die Bremsvorrichtung nach dem vorherigen Anspruch, wobei die eine oder mehreren Führungsstangen (183) eine Vielzahl benachbarter Rillen (184) mit einem Profil umfassen, das geeignet ist, das Seil (30) aufzunehmen und zu verhindern, dass sich das Seil löst Rille oder verhindern eine Seilverschiebung zwischen einer der benachbarten Rillen, wobei die eine oder mehreren Führungsstangen (183) vorzugsweise aus Metall bestehen und eine zylindrische Form mit einem Abschnitt entlang der Achse (X) aufweisen, der aus einer Vielzahl benachbarter Rillen besteht ( 184) und Reliefs (185) mit einem Profil, einer Breite und einer solchen Tiefe, dass sie das Seil (30) aufnehmen und verhindern, dass sich das Seil aus der Rille löst, oder eine Verschiebung des Seils zwischen einer der benachbarten Rillen verhindern.

5. Die Bremsvorrichtung nach einem oder mehreren der vorhergehenden Ansprüche, **dadurch gekennzeichnet, dass** sie umfasst:
- eine einzelne Seiltrommel (12);
- einen Rahmen (11) aus Metall, vorzugsweise Stahl, Gusseisen oder Aluminium, wobei der Rahmen (11)
- das erste Ende (L1) ist eine abnehmbare Verschlussplatte (15), um das Aufwickeln des Seils (30) um die Seiltrommel (12) zu erleichtern und optional das Aufwickeln des Seils (30) um die Seiltrommel (12) zu erleichtern die Führungsstangen (183);
- das zweite Ende (L2) ein Stützelement (16) mit Befestigungsmitteln (17) zum Befestigen des Rahmens (11) am Stamm einer Pflanze oder am Boden oder an einer anderen festen Stütze, vorzugsweise an der Basis, umfasst Der Stamm der Pflanze muss beschnitten oder abgeholzt werden.

6. Die Bremsvorrichtung nach dem vorherigen Anspruch, wobei die Befestigungsmittel (17) Ringe oder Haken oder andere gleichwertige Mittel sind, die zur stabilen Befestigung des Rahmens (11) am Baumstamm in Verbindung mit Schnüren, Metalldrähten, Schrauben oder Nägeln nützlich sind .

7. Bremsvorrichtung nach einem oder mehreren der vorhergehenden Ansprüche, **dadurch gekennzeichnet, dass** das eine oder die mehreren Bremsmittel (14) ausgewählt sind aus der Gruppe bestehend aus: Sattelbremsen, Scheibenbremsen, Trommelbremsen, Bandbremsen, Ölbadbremsen oder andere mechanische Bremsen; Magnetbackenbremsen, elektromagnetische Bremsen, Permanentmagnetbremsen oder andere elektromagnetische Bremsen; Hybridbremsen, die durch eine Kombination davon erhalten werden.

8. Bremsvorrichtung nach einem oder mehreren der vorhergehenden Ansprüche, wobei die Steuereinheit (20) vom mechanischen Typ, vom elektromechanischen Typ oder vom elektronischen Typ ist und die Bremse (14) mittels eines öldynamischen oder hydraulischen Kreislaufs betätigt, ein pneumatischer Schaltkreis, ein elektrischer Schaltkreis oder Funkimpulse oder eine Kombination davon.

9. Bremsvorrichtung nach dem vorhergehenden Anspruch, wobei die Steuereinheit (20) vom mechanischen Typ ist und eine Platte (21) mit einem daran angelenkten Hebel (22) umfasst, dessen Bewegung, übertragen durch einen oleodynamischen Kreislauf (23), bestimmt die Bremswirkung der Scheibenbremse (14).

10. Bremsvorrichtung nach einem oder mehreren der vorhergehenden Ansprüche, **dadurch gekennzeichnet, dass** sie weiterhin eine dynamometrische Bremse (40) umfasst, die mit der Welle (13) und/oder der Seiltrommel (12) verbunden oder integriert ist und sich anpasst die Bremswirkung der Bremse (14), wenn das auf die Seiltrommel (12) ausgeübte Momentandrehmoment Mᵢₛₜ einen vorgegebenen Mₘₐₓ-Wert überschreitet, um dynamische Impulsbelastungen zu minimieren und das Absenken der angehängten Last unter den besten Sicherheitsbedingungen zu ermöglichen.

11. Bremsvorrichtung nach einem oder mehreren der vorhergehenden Ansprüche, **dadurch gekennzeichnet, dass** sie außerdem ein Seilwickelsystem (50) umfasst, das die Welle (13) drehen kann, um das Anheben schwebender Lasten, vorzugsweise Äste oder Stammstücke, zu steuern beim Baumbeschneiden oder Baumfällen.

12. Bremsvorrichtung nach dem vorhergehenden Anspruch, **dadurch gekennzeichnet, dass** das Seilwickelsystem (50) einen mit der Welle (13) verbundenen Aktuator umfasst, wobei der Aktuator eine Handwinde oder ein Verbrennungsmotor oder ein Elektromotor ist.

## Revendications

1. Dispositif de freinage (1) pour la descente contrôlée de branches, de morceaux de tronc ou de charges suspendues, comprenant :
- une unité de freinage (10) ;
- une unité de commande (20) pour contrôler l'action de ladite unité de freinage (10),
ladite unité de freinage (10) comprenant :
- un cadre (11) ayant une première extrémité (L1) et une deuxième extrémité (L2) opposée à ladite première extrémité (L1), et comportant des moyens de fixation (17) pour bloquer ledit cadre (11) à un support fixe ;
- un ou plusieurs tambours à câble (12) reliés de manière rotative auxdites première et seconde extrémités (L1, L2) dudit cadre (11) au moyen d'arbres coaxiaux correspondants (13) audit un ou plusieurs tambours à câble (12) ; **caractérisé par** ledit dispositif de freinage (1) comprenant :
- un ou plusieurs moyens de freinage (14) reliés audit châssis (11) et aptes à contrôler le mouvement de rotation d'au moins un desdits tambours à câble (12) et/ou d'au moins un desdits arbres coaxiaux (13) autour de son axe lors de la descente contrôlée de charges suspendues, de préférence de branches ou de morceaux de tronc lors d'opérations d'élagage ou d'abattage d'arbres,
ledit un ou plusieurs tambours à câble (12) autour desquels un ou plusieurs tours d'un câble (30) sont enroulés,
- ladite corde présentant une première extrémité (31) solidaire de la charge suspendue à descendre, et une deuxième extrémité (32) laissée libre ou contrainte à un support fixe ou au sol,
- chacun desdits un ou plusieurs tambours à câble (12) ayant une surface (S) qui empêche ledit glissement dudit câble (30) sur ladite surface (S) lorsque lesdits un ou plusieurs tambours à câble (12) tournent autour de leur axe comme un résultat de l'abaissement contrôlé de la charge suspendue à abaisser.

2. Dispositif de freinage selon la revendication précédente **caractérisé en ce que** chacun desdits un ou plusieurs tambours à câble (12) est réalisé en métal, bois, caoutchouc ou matière plastique et présente une surface à friction élevée (S) sur laquelle un mouvement non directionnel le motif est réalisé au moyen de moletage, de moulage ou d'une autre opération d'usinage utile pour produire une surface à friction élevée.

3. Dispositif de freinage selon la revendication 1 ou 2, **caractérisé en ce qu'**il comprend en outre des moyens de guidage (18) pour faciliter la bonne insertion de ladite corde (30) dans l'unité de freinage (10), lesdits moyens de guidage (18) comprenant :
- un ou plusieurs guide-cordes, de préférence un guide-corde d'entrée (181) et un guide-corde de sortie (182) pour faciliter le passage de la corde (30) dans et hors de ladite unité de freinage (10) ;
- une ou plusieurs tiges de guidage (183) pour empêcher ledit câble (30) de se chevaucher, de se tordre ou de se déplacer le long dudit ou desdits tambours de câble (12).

4. Dispositif de freinage selon la revendication précédente, dans lequel lesdites une ou plusieurs tiges de guidage (183) comprennent une pluralité de rainures adjacentes (184) présentant un profil adapté pour accueillir le câble (30) et empêcher ledit câble de se détacher du rainure, ou empêcher un déplacement du câble entre une des rainures adjacentes, lesdites une ou plusieurs tiges de guidage (183) étant de préférence réalisées en métal et présentant une forme cylindrique avec une section selon l'axe (X) constituée d'une pluralité de rainures adjacentes (184) et des reliefs (185) ayant un profil, une largeur et une profondeur tels qu'ils accueillent le câble (30) et empêchent ledit câble de sortir de la rainure, ou empêchent un déplacement du câble entre l'une des rainures adjacentes.

5. Dispositif de freinage selon une ou plusieurs des revendications précédentes, **caractérisé en ce qu'**il comprend :
- un tambour à câble unique (12) ;
- un cadre (11) en métal, de préférence en acier, en fonte ou en aluminium, ledit cadre (11) dans lequel
- ladite première extrémité (L1) est une plaque de fermeture amovible (15) pour faciliter l'enroulement de ladite corde (30) autour dudit tambour à corde (12), et éventuellement pour faciliter l'enroulement de ladite corde (30) autour dudit tambour à corde (12) et pour lesdites tiges de guidage (183) ;
- ladite deuxième extrémité (L2) comprend un élément de support (16) présentant des moyens de fixation (17) pour bloquer ledit cadre (11) au tronc d'une plante, ou au sol, ou à un autre support fixe, de préférence à la base de le tronc de la plante à tailler ou à couper.

6. Dispositif de freinage selon la revendication précédente, dans lequel lesdits moyens de fixation (17) sont des anneaux ou crochets ou autres moyens équivalents utiles pour bloquer de manière stable ledit cadre (11) au tronc d'arbre en association avec des cordes, des fils métalliques, des vis ou des clous.

7. Dispositif de freinage selon une ou plusieurs des revendications précédentes, **caractérisé en ce que** ledit un ou plusieurs moyens de freinage (14) sont choisis dans le groupe constitué de : freins à étrier, freins à disque, freins à tambour, freins à bande, freins à bain d'huile , ou d'autres freins mécaniques ; freins à sabots magnétiques, freins électromagnétiques, freins à aimant permanent ou autres freins électromagnétiques ; freins hybrides obtenus par une combinaison de ceux-ci.

8. Dispositif de freinage selon une ou plusieurs des revendications précédentes, dans lequel ladite unité de commande (20) est de type mécanique, ou de type électromécanique, ou de type électronique et actionne ledit frein (14) au moyen d'un circuit oléodynamique ou hydraulique, un circuit pneumatique, un circuit électrique, ou des impulsions radio, ou par une combinaison de ceux-ci.

9. Dispositif de freinage selon la revendication précédente, dans lequel ladite unité de commande (20) est du type mécanique et comprend un plateau (21) sur lequel pivote un levier (22) dont le mouvement, transmis par un circuit oléodynamique (23), détermine l'action de freinage dudit frein à disque (14).

10. Dispositif de freinage selon une ou plusieurs des revendications précédentes, **caractérisé en ce qu'**il comprend en outre un frein dynamométrique (40) relié à, ou solidaire de, ledit arbre (13) et/ou ledit tambour à câble (12) qui s'adapte l'action de freinage dudit frein (14) lorsque le couple instantané Mᵢₛₜ appliqué audit tambour de câble (12) dépasse une valeur Mₘₐₓ prédéterminée, de manière à minimiser les charges dynamiques impulsives et à permettre la descente de la charge suspendue dans les meilleures conditions de sécurité.

11. Dispositif de freinage selon une ou plusieurs des revendications précédentes, **caractérisé en ce qu'**il comprend en outre un système d'enroulement de corde (50) apte à faire tourner l'arbre (13) de manière à contrôler le soulèvement de charges suspendues, de préférence des branches ou des morceaux de tronc. lors de l'élagage ou de l'abattage d'arbres.

12. Dispositif de freinage selon la revendication précédente **caractérisé en ce que** ledit système d'enroulement de câble (50) comprend un actionneur relié audit arbre (13), ledit actionneur étant un treuil manuel ou un moteur à combustion interne ou un moteur électrique.
